# Europäisches Patentamt
# European Patent Office
# Office européen des brevets

(19)

(11) Numéro de publication: **0 014 643**
**B1**

(12)

# FASCICULE DE BREVET EUROPEEN

(45) Date de publication du fascicule du brevet:
**16.03.83**

(51) Int. Cl.³: **D 06 F 75/18** // F16K1/52

(21) Numéro de dépôt: **80400155.0**

(22) Date de dépôt: **31.01.80**

(54) **Dispositif d'injection d'eau pour fer à repasser à vapeur, et fer à repasser à vapeur s'y rapportant.**

(30) Priorité: **13.02.79 FR 7903622**

(43) Date de publication de la demande:
**20.08.80 Bulletin 80/17**

(45) Mention de la délivrance du brevet:
**16.03.83 Bulletin 83/11**

(84) Etats contractants désignés:
**BE CH DE GB IT LU NL SE**

(56) Documents cités:
**CH-A-448 004**
**FR-A-1 508 112**
**FR-A-2 176 839**
**FR-A-2 206 461**
**FR-A-2 290 524**
**FR-A-2 337 780**
**US-A-2 384 839**
**US-A-3 165 843**
**US-A-3 410 521**
**US-A-4 070 773**

(73) Titulaire: **SEB S.A. Société Anonyme française,
F-21260 Selongey (FR)**

(72) Inventeur: **Schwob, Pierre, 55 avenue des Frères
Lumière, F-69008 Lyon (FR)**

(74) Mandataire: **Bouju, André, 38 Avenue de la Grande
Armée, F-75017 Paris (FR)**

ACTORUM AG

## Dispositif d'injection d'eau pour fer à repasser à vapeur, et fer à repasser à vapeur s'y rapportant

La présente invention concerne un dispositif d'injection d'eau pour fer à repasser à vapeur, du genre énoncé dans le préambule de la revendication 1. Un tel dispositif est destiné à amener un débit d'eau prédéterminé dans une chambre de vaporisation de ce fer.

La présente invention concerne aussi un fer à repasser à vapeur muni de ce dispositif.

De tels dispositifs d'injection comportent des moyens commandant l'obturation ou le dégagement d'un passage pour l'écoulement goutte à goutte de l'eau, généralement par gravité, d'un réservoir vers une chambre de vaporisation qui débouche par des canaux sous la semelle du fer à repasser.

Les FR-A-2 176 839, USA 2 353 426 décrivent un dispositif de ce genre comprenant un pointeau de forme générale cylindrique, pouvant se déplacer axialement pour entrer et sortir d'un ajutage pratiqué dans un matériau élastique. Selon sa position, ce pointeau empêche ou permet le passage de l'eau par l'orifice de l'ajutage vers la chambre de vaporisation.

Un tel dispositif connu présente divers inconvénients: l'ajutage, pour permettre le passage goutte à goutte de l'eau, présente nécessairement un diamètre très faible. Le pointeau, de diamètre correspondant, est donc fragile. En outre, chaque fois que l'utilisateur manœuvre le pointeau, il le fait sortir et rentrer dans l'ajutage en matière élastique, ce qui est à l'origine d'une sollicitation importante pour l'ajutage qui travaille à température relativement élevée. De ce fait, l'orifice de l'ajutage finit à la longue par s'agrandir. De plus, il est nécessaire que le guidage du pointeau soit précis pour que celui-ci puisse pénétrer à nouveau dans l'ajutage après en être sorti. Ceci grève le coût de la fabrication. De toute façon, l'orifice de l'ajutage doit avoir la forme d'un entonnoir pour coopérer avec ce guidage. En raison de cette forme et aussi des fortes sollicitations qu'il subit, l'ajutage doit être épais, donc peu flexible, et il s'entartre facilement.

Par ailleurs, le FR-A-2 337 780 décrit un tel dispositif d'injection comprenant un pointeau constitué d'une tige creuse engagée en permanence dans un ajutage présentant un dégagement, ce pointeau pouvant tourner autour de son axe pour permettre – ou empêcher – le passage de l'eau selon qu'une lumière latérale du pointeau au niveau de l'ajutage, est en face – ou non – du dégagement. Dans le FR-A-2 290 524, la lumière et le canal axial de la tige sont remplacés par une rainure longitudinale ménagée dans la tige.

Ce dispositif connu présente l'inconvénient de s'entartrer facilement. En effet, l'ajutage n'est nullement sollicité par le mouvement de rotation du pointeau, et il est d'autre part assez épais pour pouvoir masquer la lumière ou la partie supérieure de la rainure en position de fermeture. En conséquence, il ne subit aucune déformation élastique et favorise le dépôt de tartre.

On connaît également d'après le US-A-3 410 521 une valve pour circuits hydrauliques dans laquelle le pointeau portant une rainure longitudinale est monté à coulisse dans deux flans annulaires tronconiques en métal élastique assurant à la fois le guidage et le freinage du pointeau dans la position désirée. S'il était appliqué aux fers à repasser, ce dispositif n'éviterait pas non plus le dépôt de tartre car une fois qu'ils ont subi la déformation élastique initiale due à l'engagement du pointeau, les flans restent ensuite immobiles. De plus, l'agencement décrit serait trop coûteux pour être appliqué à un fer à repasser.

Le but de la présente invention est de remédier aux inconvénients précédents en réalisant un dispositif d'injection d'eau pour fers à repasser qui soit robuste, fiable et peu coûteux.

Ce but est atteint grâce aux particularités énoncées dans la partie caractérisante de la revendication 1.

Ainsi, dans la première position extrême, ou position d'injection, l'eau traverse l'ajutage le long de la rainure, et, par suite, s'écoule goutte à goutte du réservoir d'eau vers la chambre de vaporisation. Dans l'autre position extrême, ou position de fermeture, le pointeau coopère avec la lèvre mince pour obturer l'ajutage et empêcher cet écoulement.

Comme le pointeau ne sort jamais de l'ajutage, les problèmes de guidage du pointeau sont donc particulièrement simples. En outre, comme le pointeau se déplace axialement, l'ajutage en matière élastique est déformé en flexion par ce mouvement, et le risque d'entartrage est donc amoindri. De plus, la lèvre mince est très flexible, donc particulièrement peu susceptible d'entartrage. Elle est capable d'assurer une bonne étanchéité autour du pointeau, même si ce dernier n'est pas parfaitement coaxial à l'orifice. Grâce à la partie annulaire, le montage et la fixation de l'ajutage sont faciles.

Dans une réalisation préférée de l'invention, le pointeau comprend deux parties articulées l'une à l'autre par une rotule.

Une telle disposition simplifie encore le problème du guidage du pointeau. En effet, comme la lèvre délimitant l'orifice est mince, la partie du pointeau qui coopère avec la lèvre peut toujours être introduite, au montage, dans l'orifice de l'ajutage, moyennant un certain angle au niveau de la rotule, même si l'autre partie du pointeau présente un défaut d'alignement relativement important avec cet orifice. De plus, en cas d'usure de la partie du pointeau coopérant avec l'ajutage, on peut se contenter de ne changer que cette dernière.

D'autres particularités et avantages de la présente invention ressortiront encore de la description qui va suivre.

Aux dessins annexés, donnés à titre d'exemples non limitatifs:

la fig. 1 est une vue en élévation latérale avec arraché partiel d'un fer à repasser à vapeur muni du dispositif d'injection d'eau en position de fermeture;

la fig. 2 est une vue à plus grande échelle de l'ajutage et du pointeau de la fig. 1;

la fig. 3 est une vue en coupe de l'ajutage et du pointeau, en position d'injection;

la fig. 4 est une vue en coupe de l'ajutage et du pointeau selon IV–IV de la fig. 3;

la fig. 5 est une vue en plan de l'ajutage et du pointeau;

la fig. 6 est une vue partielle en coupe du pointeau au niveau de l'articulation des deux parties qui le constituent;

la fig. 7 est une vue d'une première forme de réalisation de la partie inférieure du pointeau;

la fig. 8 est une vue, en coupe selon VIII–VIII de la fig. 7, de la partie inférieure du pointeau dans sa première forme de réalisation;

la fig. 9 est une vue d'une seconde forme de réalisation de la partie inférieure du pointeau;

la fig. 10 est une vue, en coupe selon X–X de la fig. 9, de la partie inférieure du pointeau dans sa seconde forme de réalisation;

la fig. 11 est une vue, en coupe selon XI–XI de la fig. 9, de la partie inférieure du pointeau dans sa seconde forme de réalisation;

la fig. 12 est une vue de la partie inférieure du pointeau dans sa troisième forme de réalisation;

la fig. 13 est une vue, en coupe selon XIII–XIII de la fig. 12, de la partie inférieure du pointeau dans sa troisième forme de réalisation; et

la fig. 14 est une vue en élévation latérale avec arrachement d'un fer à repasser à vapeur muni d'un dispositif d'injection d'eau suivant une variante de réalisation de l'invention, en position de fermeture.

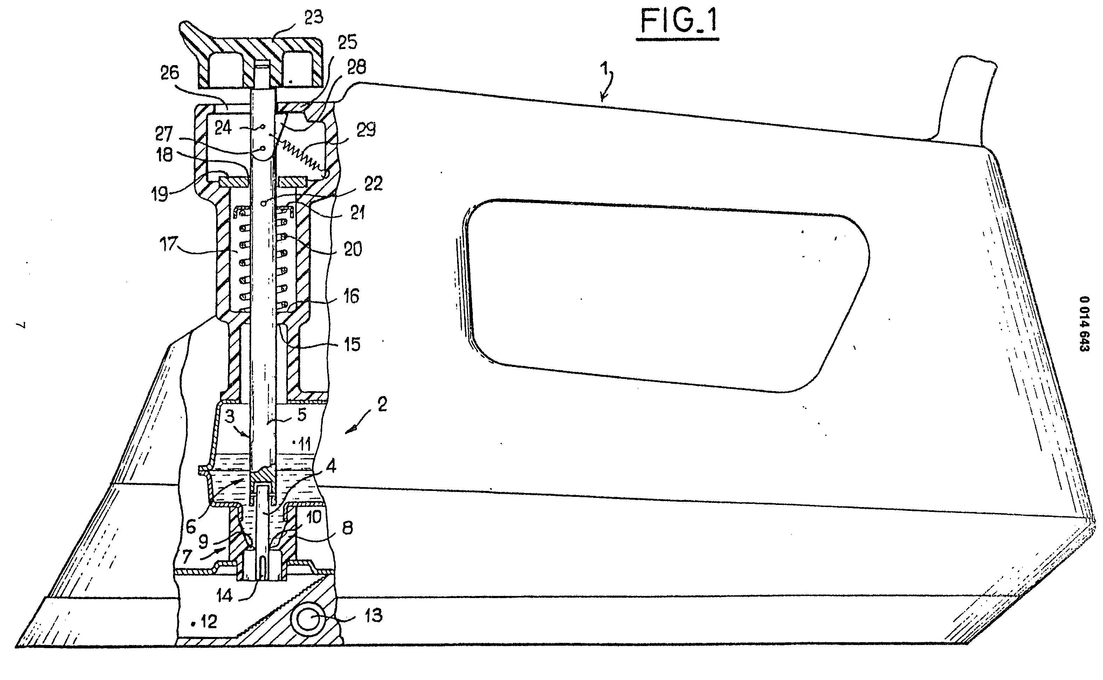

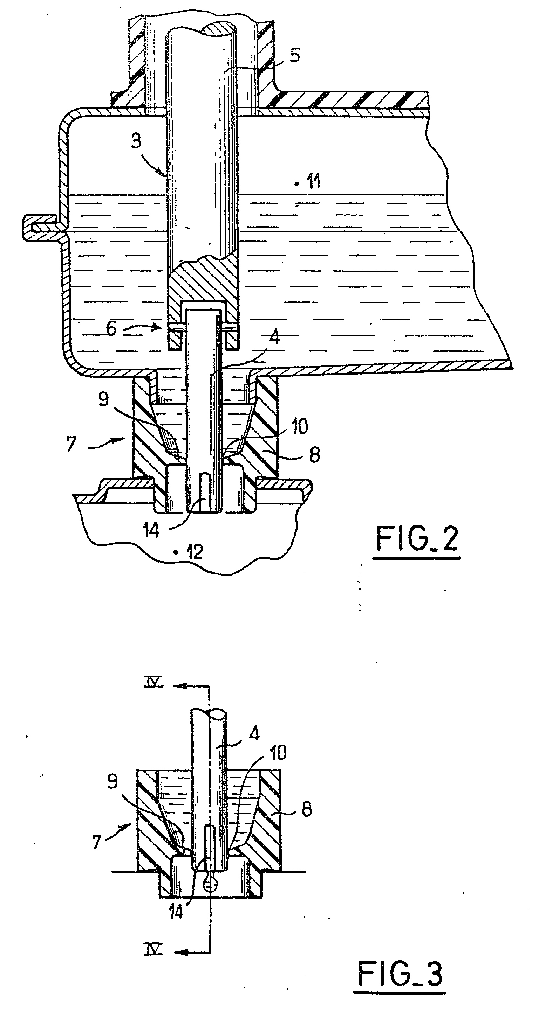

En référence aux figs. 1 et 2, un fer à repasser à vapeur 1 comporte un dispositif d'injection d'eau 2. Ce dernier comporte un pointeau 3 comprenant une aiguille 4 réalisée en polytétrafluoréthylène et un poussoir 5 réalisé en polypropylène. Ainsi, seule l'aiguille 4 est réalisée en un matériau coûteux, résistant à l'entartrage et à la température. L'aiguille 4 et le poussoir 5 sont assemblés par l'intermédiaire d'une articulation 6.

Un ajutage 7 en résine silicone comprend une partie annulaire 8 et une lèvre mince 9 disposée sur la paroi interne de ladite partie annulaire 8. Cette lèvre 9 détermine un orifice 10 sensiblement coaxial à l'aiguille 4 et enserrant cette dernière. L'orifice 10 fait communiquer un réservoir d'eau 11 avec une chambre de vaporisation 12 située à proximité d'une résistance électrique de chauffage 13 du fer à repasser 1.

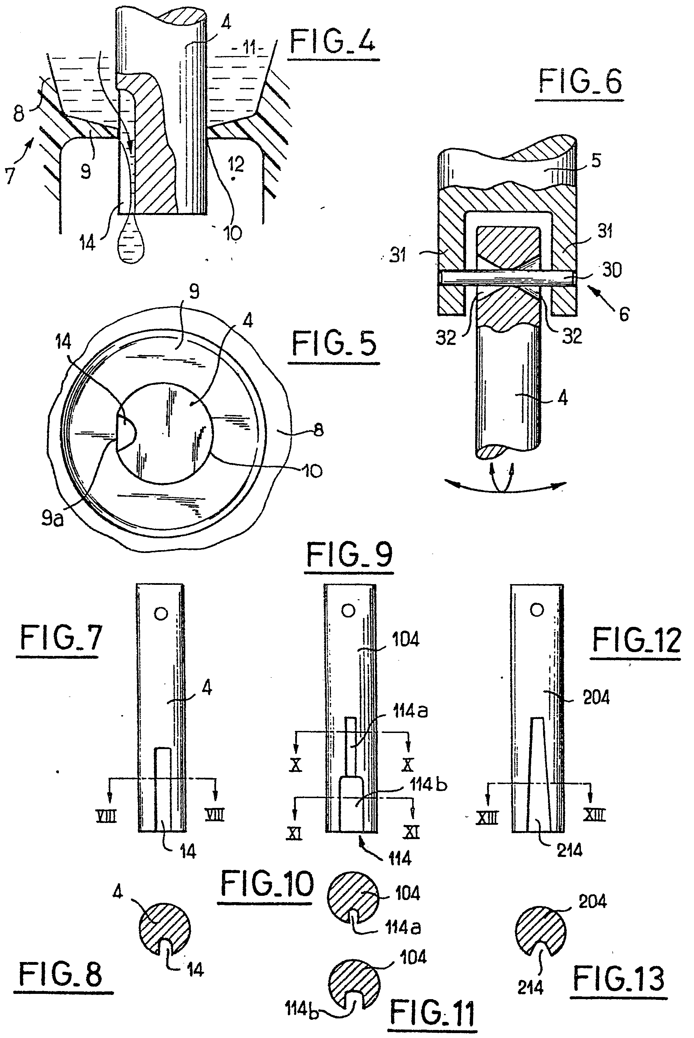

Une rainure longitudinale 14 est pratiquée dans l'aiguille 4 à partir de l'extrémité de cette dernière opposée au poussoir 5. La rainure 14 ne parcourt qu'une partie de la longueur de l'aiguille 4. En position de fermeture, comme représenté aux figs. 1 et 2, les deux extrémités de la rainure 14 sont situées d'un même côté de la lèvre 9. En position d'injection, comme représenté aux figs. 3 et 4, les deux extrémités de la rainure 14 sont respectivement situées de part et d'autre de la lèvre 9.

Le poussoir 5 est guidé en translation axiale dans un passage 15 pratiqué dans un fond 16 d'un logement cylindrique 17 et dans un passage 18 pratiqué dans un couvercle 19 du logement 17. Un ressort 20, disposé dans le logement 17, est appuyé contre le fond 16. Ce ressort 20 exerce, sur le pointeau 3, par l'intermédiaire d'une coupelle 21 et d'une goupille 22, un effort axial tendant à engager la rainure 14 de l'aiguille 4 dans la lèvre 9.

Un bouton de commande 23 est solidaire d'un cavalier 24 traversant une paroi 25 par un orifice allongé 26. Le cavalier 24 est articulé en 27 à l'extrémité du poussoir 5 opposée à l'aiguille 4. Il comporte un bec 28 qui, en position de fermeture, est en appui contre la paroi 25 sous l'effet combiné du ressort 20 et d'un ressort de rappel 29.

En position d'injection, le bec 28 est dégagé de la paroi 25, la goupille 22 est en appui contre le couvercle 19, et la rainure 14 est engagée dans la lèvre 9, de sorte que les extrémités de ladite rainure 14 sont respectivement situées de part et d'autre de ladite lèvre 9.

Comme le montrent plus particulièrement les figs. 4 et 5, le passage ménagé à l'eau pour s'écouler dans la chambre de vaporisation 12 est délimité par le fond de la rainure 14 d'une part, et la corde 9a décrite par l'extrémité de la lèvre 9 en passant d'un bord à l'autre de la rainure 14 d'autre part.

La fig. 6 montre plus particulièrement l'articulation 6. Cette articulation 6 comporte un axe 30 porté par deux pattes 31 du poussoir 5. Cet axe 30 traverse l'aiguille 4 dans laquelle est pratiqué, à cet effet, un orifice formé de deux trous tronconiques 32 disposés tête-bêche. La section minimum de cet orifice est sensiblement égale à celle de l'axe 30, et est située sensiblement au milieu dudit orifice. Grâce à cette articulation 6, l'aiguille 4 peut s'orienter dans toutes les directions par rapport au poussoir 5. Cette articulation 6 constitue donc une rotule.

Le fonctionnement du dispositif représenté est le suivant:

En position de fermeture, comme représenté aux figs. 1 et 2, l'aiguille 4 obture l'orifice 10 et l'eau ne peut pas s'écouler du réservoir d'eau 11 vers la chambre de vaporisation 12.

Si un utilisateur presse le bouton de commande 23 et le fait pivoter autour de l'articulation 27 en tendant le ressort de rappel 29, puis relâche ledit bouton de commande 23, le bec 28 se dégage de la paroi 25 et le ressort 20 pousse le pointeau 3 jusqu'à ce que la goupille 22 bute sur le couvercle 19. Le pointeau 3 est alors en position d'injection et les deux extrémités de la rainure 14 sont respectivement situées de part et d'autre de la lèvre 9. L'eau contenue dans le réservoir d'eau 11 peut alors franchir la lèvre 9 en passant dans la rainure 14, et couler goutte à goutte dans la chambre de vaporisation 12.

Pour ramener le pointeau 3 en position de fermeture, il suffit à l'utilisateur d'appuyer sur le bouton de commande 23 jusqu'à ce que le bec 28 s'engage sous la paroi 25, sous l'effet du ressort de rappel 29.

Grâce à l'articulation 6, même si les passages 15 et 18 ne sont pas correctement alignés avec l'orifice 10, l'aiguille 4 pourra coulisser sans contrainte dans la lèvre 9 moyennant une légère déformation élastique de ladite lèvre mince 9.

Les figs. 7 à 13 montrent différentes variantes pour l'aiguille 4.

Les figs. 7 et 8 représentent l'aiguille 4 telle que décrite ci-dessus. La rainure 14 est de largeur constante le long de l'axe, et sa profondeur est voisine de sa largeur, ce qui favorise l'écoulement de l'eau, compte tenu des phénomènes de capillarité. La section de la rainure 14 est donc constante et, quelle que soit la position de la rainure 14 dans la lèvre 9 pourvu que ses extrémités soient situées de part et d'autre de ladite lèvre 9, le débit d'eau sera sensiblement constant.

Les figs. 9 à 11 représentent une version différente de l'aiguille, désignée par la référence 104. Cette aiguille 104 comporte une rainure 114 subdivisée en deux tronçons 114a, 114b. Le tronçon 114a est de section plus faible que le tronçon 114b, de sorte que si la lèvre 9 enserre l'aiguille 104 au niveau du tronçon 114a, le débit d'eau est plus faible que si la lèvre 9 enserre l'aiguille 104 au niveau du tronçon 114b. L'aiguille 104 doit donc être associée à un dispositif de commande (non représenté) permettant de choisir entre ces deux positions d'injection et la position fermeture.

Une telle aiguille permet donc de choisir entre deux débits de vapeur.

Les figs. 12 et 13 représentent une troisième version de l'aiguille, portant la référence 204. L'aiguille 204 est pourvue d'une rainure 214 dont la section décroît à partir de l'extrémité libre de cette aiguille 204.

Ainsi, plus la lèvre 9 enserre l'aiguille 204 près de l'extrémité libre de ladite aiguille 204, plus le débit d'eau passant dans la chambre de vaporisation 12 est important, et plus le débit de vapeur fourni par la chambre de vaporisation 12 est lui-même important.

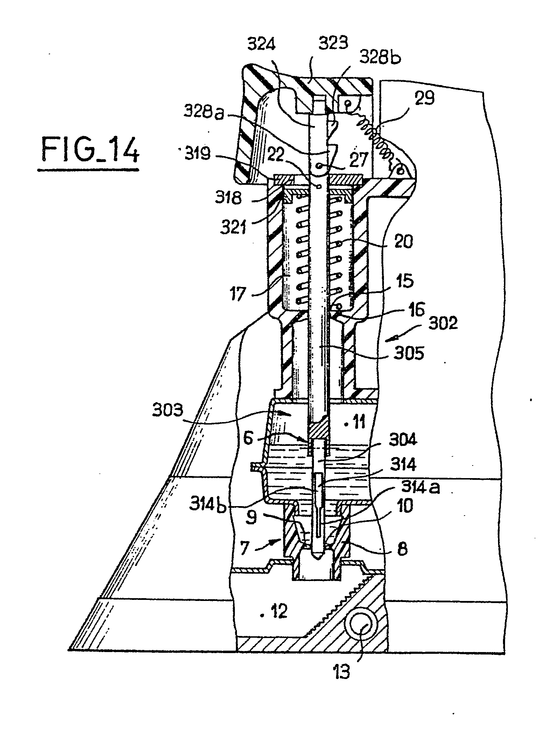

En référence à la fig. 14, les éléments identiques à ceux des figures précédentes sont affectés des mêmes références, alors que les éléments modifiés ou nouveaux sont affectés d'une référence supérieure à 300.

Le dispositif d'injection d'eau 302 comporte un pointeau 303 comprenant une aiguille 304 en polytetrafluoréthylène et un poussoir 305 en polypropylène. L'aiguille 304 et le poussoir 305 sont articulés au moyen d'une articulation 6.

Une rainure longitudinale 314 est pratiquée dans l'aiguille 304. La rainure longitudinale 314 ne s'étend pas jusqu'à l'extrèmité libre de l'aiguille 304.

En position de fermeture, comme représenté à la fig. 14, et conformément à l'invention, les deux extrémités de la rainure 314 sont situées d'un même côté de la lèvre 9. Mais, dans cette position, la rainure 314 se trouve dans le réservoir d'eau 11 au lieu de se trouver dans la chambre de vaporisation 12, comme c'était le cas dans les dispositifs décrits en référence aux figs. 1 à 13. En conséquence, en position de fermeture, la lèvre 9 enserre l'aiguille 304 entre la rainure 314 et l'extrémité libre de cette aiguille 304, alors que dans les versions décrites précédemment, la lèvre 9 enserre l'aiguille 4, 104, 204 entre la rainure 14, 114, 214 et l'articulation 6.

La rainure 314 comprend deux tronçons 314a, 314b de section différente.

Le poussoir 305 est guidé en translation axiale par le passage 15 pratiqué dans le fond 16 du logement cylindrique 17 d'une part, et par une coupelle 321 montée coulissante dans le logement 17, d'autre part.

Le ressort 20 est monté entre le fond 16 et la coupelle 321 qui prend appui sur le poussoir 305 par l'intermédiaire de la goupille 22. Le logement 17 est fermé par un couvercle 319 dans lequel est pratiqué un passage allongé 318. Un bouton de commande 323 est solidaire d'un cavalier 324 articulé en 27 à l'extrémité du poussoir 305 opposée à l'aiguille 304. Le cavalier 324 comporte deux becs superposés 328a et 328b.

En position de fermeture, comme représenté à la fig. 14, les deux becs 328a et 328b se trouvent en dehors du logement 17.

En position d'injection lente, la lèvre 9 enserre la rainure 314 au niveau du tronçon 314a, qui est le tronçon de section la plus faible, et le bec 328a, le plus proche de l'aiguille 304, est en appui contre le couvercle 319, sous l'effet combiné du ressort 20 et du ressort de rappel 29.

En position d'injection rapide, la lèvre 9 enserre la rainure 314 au niveau du tronçon 314b qui est le tronçon de section la plus forte, et l'autre bec 328b est en appui contre le couvercle 319 sous l'effet combiné du ressort 20 et du ressort de rappel 29.

En enfonçant plus ou moins le bouton de commande 323, l'utilisateur peut donc choisir entre la position de fermeture, dans laquelle l'injection d'eau est coupée, et deux positions d'injection, correspondant à deux débits de vapeur différents.

Contrairement aux versions des figs. 1 à 13, dans lesquelles la position la plus enfoncée du bouton de commande 23 correspond à la position de fermeture, dans la version représentée à la fig. 14, c'est la position relâchée du bouton de commande 323 qui correspond à la position de fermeture.

Les diverses formes de réalisations de l'invention décrites ci-dessus présentent au moins les avantages suivants:

le pointeau ne sort jamais de l'orifice et il ne se pose donc pas de problème de guidage du pointeau par rapport à l'ajutage en cours de fonctionnement; de plus, la section du passage ménagé à l'eau pour s'écouler dans la chambre de vaporisation reste constante pendant toute la vie du fer à repasser;

comme le pointeau ne sort pas de l'ajutage, la lèvre de l'orifice peut être prévue mince, et elle est donc très étanche et ne s'entartre pas facilement;

comme la lèvre est mince et que le pointeau, qui est articulé, n'en sort jamais, le pointeau ne nécessite pas d'être parfaitement aligné sur elle au montage.

Bien entendu, l'invention n'est pas limitée aux exemples qui viennent d'en être donnés et de nombreux aménagements ou modifications peuvent être apportés à ces exemples, sans sortir du cadre de l'invention.

C'est ainsi que le dispositif de commande peut être réalisé de toute manière adéquate pour permettre le maintien sélectif du pointeau dans une position de repos et une ou plusieurs position(s) d'injection. En particulier, et surtout dans le cas de la rainure dont la section varie de façon continue le long de l'aiguille, comme représenté aux figs. 12 et 13, la commande peut être réalisée au moyen d'un système à vis coaxial au pointeau.

Dans la version représentée aux figs. 1 à 13, la rainure ne débouche pas nécessairement à l'extrémité de l'aiguille et peut se terminer en deçà de cette extrémité.

L'aiguille du dispositif d'injection représenté à la fig. 14 peut comporter une rainure à section constante, auquel cas ce dispositif ne donnera le choix qu'entre une position de repos et une seule position d'injection, ou au contraire comporter une rainure à section variant de façon continue, permettant de choisir entre une position de repos et une position d'injection à débit réglable en continu. Il va de soi que dans chaque cas le dispositif de commande est adapté pour permettre l'utilisation de ces diverses formes de rainure.

Le poussoir 5, 305, peut être constitué de tout matériau économique approprié.

L'aiguille 4, 104, 204, 304 et la lèvre 9 peuvent être constituées chacune de tout matériau présentant les qualités requises pour leur fonctionnement. Ces qualités sont notamment une bonne résistance à la température et à l'entartrage ainsi que, pour la lèvre 9, une élasticité suffisante.

## Revendications

1. Dispositif d'injection d'eau pour fer à repasser à vapeur, comprenant un pointeau (3, 303) mobile axialement suivant une course prédéterminée dans l'orifice (10) d'un ajutage (7) en matière élastique enserrant le pointeau (3, 303), l'orifice (10) de l'ajutage (7) étant sensiblement coaxial au pointeau (3) et faisant communiquer un réservoir d'eau (11) avec une chambre de vaporisation (12), le pointeau (3, 303) présentant une rainure longitudinale (14, 114, 214, 314) sur une partie de sa longueur, la course du pointeau (3, 303) étant telle que, dans une première position extrême, les deux extrémités de la rainure (14, 114, 214, 314) sont situées de part et d'autre de l'orifice (10), et que, dans une seconde position extrême, les deux extrémités de la rainure (14, 114, 214, 314) sont situées d'un même côté de l'orifice (10), caractérisé en ce que l'ajutage (7) est constitué par une partie annulaire (8) en élastomère présentant sur sa paroi interne une lèvre flexible sensiblement radiale (9) qui délimite l'orifice (10) de cet ajutage (7).

2. Dispositif conforme à la revendication 1, caractérisé en ce que le pointeau comprend deux parties (4, 5) articulées l'une à l'autre par une rotule (6).

3. Dispositif conforme à la revendication 2, caractérisé en ce que la rotule (6) comprend un axe (30) porté par l'une (4) des parties du pointeau (3, 303), l'autre partie (5) du pointeau (3, 303) présentant, pour recevoir cet axe (30), un passage (32) formé de deux cavités coniques alignées en opposition communiquant par leur sommet, ce passage (32) ayant son plus petit diamètre situé sensiblement en son milieu et sensiblement égal au diamètre de l'axe (30).

4. Dispositif conforme à l'une des revendications 2 ou 3, caractérisé en ce que seule la partie (4) du pointeau (3, 303) qui coopère avec l'ajutage (7) est réalisée en une matière résistant entre autres à l'entartrage et à la température.

5. Dispositif conforme à l'une des revendications 1 à 4, caractérisé en ce que la section de la rainure (114, 214) carie le long de l'axe, en fonction de la loi d'écoulement prévue.

6. Dispositif conforme à l'une des revendications 1 à 5, caractérisé en ce que la rainure (14, 114, 214) se prolonge jusqu'à l'extrémité du pointeau (3), située dans la chambre de vaporisation (12), et en ce que les moyens de commande (23) sont associés à l'autre extrémité du pointeau.

7. Dispositif conforme à l'une des revendications 1 à 5, caractérisé en ce que la rainure (314) s'arrête en deçà de l'extrémité du pointeau (303) située dans la chambre de vaporisation (12), en ce que, dans la seconde position extrême, l'ajutage (7) enserre le pointeau (303) entre sa rainure (314) et son extrémité précitée, et en ce que des moyens de commande (323) sont associés à l'autre extrémité du pointeau.

8. Fer à repasser à vapeur muni du dispositif d'injection d'eau conforme à l'une des revendications 1 à 7, caractérisé en ce que le dispositif précité (2, 302) assure la communication sélective entre un réservoir d'eau (11) et une chambre de vaporisation (12).

## Patentansprüche

1. Wassereinspritzvorrichtung für Dampfbügeleisen, mit einer Düsennadel (3, 303), die axial bewegbar ist entlang einem vorbestimmten Hub in einer Düsenöffnung (10) einer Düse (7) aus elastischem Material, welche die Düsennadel (3, 303) umspannt, wobei die Düsenöffnung (10) im wesentlichen koaxial mit der Düsennadel ist und einen Wasserbehälter (11) mit einer Verdampfungskammer (12) in Verbindung bringt, wobei ferner die Düsennadel (3, 303) auf einem Teil ihrer Länge eine Längsrille (14, 114, 214, 314) aufweist, und wobei der Hub der Düsennadel (3, 303) derart ist, dass in einer ersten Endstellung die beiden Enden der Rille (14, 114, 214, 314) sich auf beiden Seiten der Öffnung (10) befinden, und dass in einer zweiten Endstellung die beiden Enden der Rille (14, 114, 214, 314) sich auf derselben Seite der Öffnung (10) befinden, dadurch gekennzeichnet, dass die Düse (7) gebildet ist aus einem ringförmigen Teil (8) aus Elastomermaterial, das auf seiner Innenwandung eine im wesentlichen radiale, flexible Lippe (9) aufweist, welche die Öffnung (10) dieser Düse (7) begrenzt.

2. Vorrichtung nach Anspruch 1, dadurch gekennzeichnet, dass die Düsennadel zwei über ein Kugelgelenk (6) aneinander angelenkte Teile (4, 5) enthält.

3. Vorrichtung nach Anspruch 2, dadurch gekennzeichnet, dass das Kugelgelenk (6) eine von dem einen Teil (4) der Düsennadel (3, 303) getragene Achse (30) enthält, wobei der andere Teil (5) der Düsennadel (3, 303) einen Durchgang (32) für diese Achse (30) aufweist, der aus zwei konischen Löchern gebildet ist, die einander gegenüber in umgekehrter Orientierung angeordnet sind, und wobei der kleinste Durchmesser des Durchganges (32) der sich etwa in seiner Mitte befindet, im wesentlichen gleich dem Querschnitt der genannten Achse (30) ist.

4. Vorrichtung nach Anspruch 2 oder 3, dadurch gekennzeichnet, dass nur derjenige Teil (4) der Düsennadel (3, 303), der mit der Düse (7) zusammenwirkt, aus einem Werkstoff gebildet ist, der unter anderem Ablagerungen verhindert und temperaturbeständig ist.

5. Vorrichtung nach einem der Ansprüche 1 bis 4, dadurch gekennzeichnet, dass der Querschnitt der Rille (114, 214) sich entlang der Achse in Abhängigkeit von dem vorgesehenen Strömungsgesetz ändert.

6. Vorrichtung nach einem der Ansprüche 1 bis 5, dadurch gekennzeichnet, dass die Rille (14, 114, 214) bis zum Ende der Düsennadel (3) verlängert ist, das sich in der Verdampfungskammer (12) befindet, und dass Steuermittel (23) dem anderen Ende der Düsennadel zugeordnet sind.

7. Vorrichtung nach einem der Ansprüche 1 bis 5, dadurch gekennzeichnet, dass die Rille (314) vor dem Ende der Düsennadel (303) aufhört, welches sich in der Verdampfungskammer (12) befindet, dass in der zweiten Endstellung die Düse (7) die Düsennadel (303) zwischen ihrer Rille (314) und ihrem genannten Ende umspannt und dass Steuermittel (323) dem anderen Ende der Düsennadel zugeordnet sind.

8. Dampfbügeleisen mit einer Wassersprühvorrichtung nach einem der Ansprüche 1 bis 7, dadurch gekennzeichnet, dass die genannte Vorrichtung (2, 302) die selektive Verbindung zwischen einem Wasserbehälter (11) und einer Verdampfungskammer gewährleistet.

## Claims

1. A water injection device for a steam iron, comprising a plunger (3, 303) which is capable of moving axially over a predetermined range of travel within the orifice (10) of a nozzle (7) of elastic material closely fitted around the plunger (3, 303), the orifice (10) of the nozzle (7) being substantially coaxial with the plunger (3) and intended to provide a communication between a water reservoir (11) and a vaporization chamber (12), the plunger (3, 303) being provided with a longitudinal groove (14, 114, 214, 314) along part of its length, the range of travel of the plunger (3, 303) being such that the two ends of the groove (14, 114, 214, 314) are located on each side of the orifice (10) in a first end position and that the two ends of the groove (14, 114, 214, 314) are located on one and the same side of the orifice (10) in a second end position, characterized in that the nozzle (7) is constituted by an annular portion (8) of elastomer provided on its internal wall with a substantially radial flexible lip (9) which delimits the orifice (10) of this nozzle (7).

2. Device in accordance with claim 1, characterized in that the plunger comprises two portions (4, 5) pivotally coupled together by means of a knuckle-joint assembly (6).

3. Device in accordance with claim 2, characterized in that the knuckle-joint assembly (6) comprises a pivot-pin (30) carried by one portion (4) of the plunger (3, 303), the other portion (5) of the plunger (3, 303) being provided in order to receive this pivot-pin (30) with a passage (32) formed by two conical cavities aligned in opposite relation so that their head ends communicate with each other, the smallest diameter of this passage (32) being located substantially at its centre and being substantially equal to the diameter of the pivot-pin (30).

4. Device in accordance with either claim 2 or claim 3, characterized in that only the portion (4) of the plunger (3, 303) which cooperates with the nozzle (7) is formed of material which affords resistance, among other things, to scale formation and to high temperature.

5. Device in accordance with any one of claims 1 to 4, characterized in that the cross-section of the groove (114, 214) varies along the axis as a function of the law of flow adopted.

6. Device in accordance with any one of claims 1 to 5, characterized in that the groove (14, 114, 214) extends to that end of the plunger (3) which is located within the vaporization chamber (12) and that the control means (23) are associated with the other end of the plunger.

7. Device in accordance with any one of claims 1 to 5, characterized in that the groove (314) stops at a distance of the end of the plunger (303) which is located within the vaporization chamber (12), in that in the second end position, the nozzle (7) closely surrounds the plunger (303) between its groove (314) and its aforementioned end, and in that control means (323) are associated with the other end of the plunger.

8. Steam iron equipped with the water injection device in accordance with any one of claims 1 to 7, characterized in that the device aforesaid (2, 302) ensures selective communication between a water reservoir (11) and a vaporization chamber (12).

FIG.1

FIG_2

FIG_3

FIG.4

FIG.6

FIG.5

FIG.9

FIG.7

FIG.12

FIG.10

FIG.8

FIG.11

FIG.13

FIG_14